# EUROPEAN PATENT APPLICATION

(11) **EP 4 009 503 A1**
(43) Date of publication of application: **08.06.2022**
(21) Application number: 21207110.4
(22) Date of filing: 09.11.2021
(51) Int. Cl.: H02M 1/00, H02M 3/158, H02M 3/335

(54) **VOLTAGE CONVERSION DEVICE**

(30) Priority: 03.12.2020 JP 2020200809
(71) Applicant: Yazaki Corporation, Minato-ku Tokyo 108-8333 (JP)
(72) Inventor: Kanda, Keisuke, Susono-shi, Shizuoka, 410-1194 (JP); Ito, Satoshi, Susono-shi, Shizuoka, 410-1194 (JP); Yoshimitsu, Shota, Susono-shi, Shizuoka, 410-1194 (JP)
(74) Representative: Hoffmann Eitle

(57) **Abstract**

A voltage conversion device includes input-side switching elements provided on an input side of a smoothing inductance and configured to perform switching, first and second power supply lines provided on an output side of the smoothing inductance and configured to respectively supply power to a first load and a second load, output-side switching elements respectively provided on the first and second power supply lines, and a control unit configured to perform on/off control on the input-side switching elements and the output-side switching elements. The control unit performs the on/off control by setting switching frequencies of the output-side switching elements to be lower than switching frequencies of the input-side switching elements.

## Description

### TECHNICAL FIELD

The present invention relates to a voltage conversion device.

### BACKGROUND ART

In related-art, a voltage conversion device having a full bridge circuit that supplies power to a load after voltage conversion has been proposed (for example, see Patent Literature 1). As such a voltage conversion device, a single-inductor multiple-output (SIMO) type voltage conversion device has been proposed in order to obtain a plurality of outputs.

### Citation List

### Patent Literature

Patent Literature 1: JP-2020-080625-A

### SUMMARY OF INVENTION

When two output currents Io₁, Io₂ are obtained as in a SIMO type voltage conversion device disclosed in Patent Literature 1, a duty ratio D₁ of a first switching element on a secondary side is D₁ = Io₁/(Io₁ + Io₂), and a duty ratio D₂ of a second switching element on the secondary side is D₂ = Io₂/(Io₁ + Io₂).

Here, when a difference between the output currents Iο₁, Io₂ is large, one of the duty ratios D₁, D₂ is small and the other is large. On the other hand, a switching element has a minimum pulse width depending on a rise time and a fall time of a specific pulse and a drive capability of a driver that drives the switching element. When an attempt is made to perform switching with a pulse width smaller than the minimum pulse width at the time of switching, the switching element is driven without being completely turned on, so that heat generation becomes a problem and an output cannot be maintained. Therefore, it is necessary to ensure the minimum pulse width at the time of switching, and this becomes a reference of a minimum duty ratio. However, when the difference between the output currents Io₁, Io₂ is large, one of the duty ratios D₁, D₂ becomes small, so that the minimum pulse width cannot be ensured, which causes a problem of heat generation and makes it impossible to obtain a desired output.

Therefore, when a switching frequency is lowered as a whole, that is, a switching cycle is prolonged, the minimum pulse width is easily ensured even if one of the duty ratios D₁, D₂ becomes small. However, in this case, it is necessary to store a large amount of energy in a smoothing inductance in response to a long cycle, resulting in an increase in a size of the smoothing inductance.

The present invention has been made to solve such related-art problems, and an object thereof is to provide a voltage conversion device capable of ensuring a minimum pulse width, suppressing heat generation, easily obtaining a desired output, and preventing an increase in a size of a smoothing inductance.

A voltage conversion device according to the present invention is a voltage conversion device configured to convert an input voltage supplied from a power supply side into a desired output voltage. The voltage conversion device includes: a smoothing inductance configured to store energy therein; an input-side switching unit provided on an input side of the smoothing inductance and configured to perform switching and supply a current to the smoothing inductance according to the switching; first and second power supply lines provided on an output side of the smoothing inductance and configured to respectively supply power to a first load and a second load operating at an operating voltage different from that of the first load; first and second output-side switching units respectively provided on the first and second power supply lines; and a control unit configured to perform on/off control on the input-side switching unit and first and second output-side switching units. The control unit performs the on/off control by setting switching frequencies of the first and second output-side switching units to be lower than a switching frequency of the input-side switching unit.

### BRIEF DESCRIPTION OF DRAWINGS

Fig. 1 is a configuration diagram of a voltage conversion device according to an embodiment of the present invention.
Fig. 2 is a timing chart showing a state of control of a voltage conversion device according to a first comparative example.
Fig. 3 is a timing chart showing a state of control of a voltage conversion device according to a second comparative example.
Fig. 4 is a timing chart showing a state of control of the voltage conversion device according to the present embodiment.
Fig. 5 is a flowchart showing processing of a control unit according to the present embodiment.

### DESCRIPTION OF EMBODIMENTS

Hereinafter, the present invention will be described in accordance with a preferred embodiment. The present invention is not limited to the embodiment to be described below, and can be changed as appropriate without departing from the scope of the present invention. In the embodiment described below, some configurations are not shown or described, but it goes without saying that a known or well-known technique is applied as appropriate to details of an omitted technique within a range in which no contradiction occurs to contents described below.

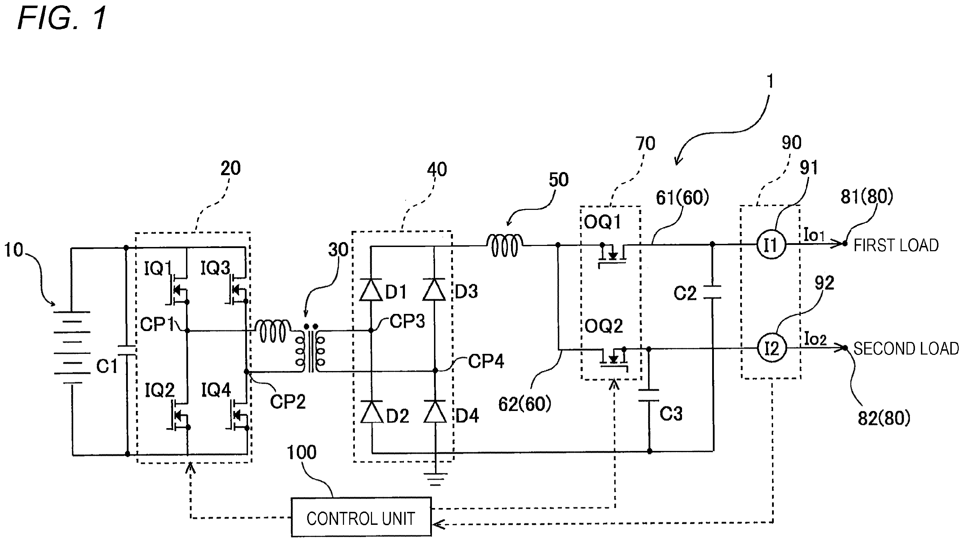

Fig. 1 is a configuration diagram of a voltage conversion device according to an embodiment of the present invention. A voltage conversion device 1 shown in Fig. 1 uses a voltage from a high-voltage power supply 10 as an input voltage and outputs a plurality of (two) different desired output voltages, and includes the power supply 10, a full bridge circuit 20, a transformer 30, a rectifier circuit 40, a smoothing inductance 50, a power supply line 60, a switching unit 70, an output unit 80, a current sensor 90 and a control unit (control means) 100.

The power supply 10 supplies DC power. The power supply 10 is configured by, for example, connecting a plurality of battery cells in series. In the present embodiment, the power supply 10 supplies a relatively high voltage that requires insulation.

The full bridge circuit 20 is provided on an input side of the smoothing inductance 50 (power supply 10 side), and converts the DC power into AC power. The full bridge circuit 20 is a phase shift type switching circuit, and includes four input-side switching elements (input-side switching means) IQ1 to IQ4. The four input-side switching elements IQ1 to IQ4 are constituted by, for example, N-channel metal-oxide-semiconductor field-effect transistors (MOSFETs), and are switched to obtain the desired output voltage.

The first input-side switching element IQ1 has a drain connected to a positive electrode of the power supply 10 and a source connected to a first connection point CP1. The second input-side switching element IQ2 has a drain connected to the first connection point CP1 and a source connected to a negative electrode of the power supply 10. The third input-side switching element IQ3 has a drain connected to the positive electrode of the power supply 10 and a source connected to a second connection point CP2. The fourth input-side switching element IQ4 has a drain connected to the second connection point CP2 and a source connected to the negative electrode of the power supply 10.

Gates of the four input-side switching elements IQ1 to IQ4 are connected to the control unit 100. The control unit 100 performs switching control on the four input-side switching elements IQ1 to IQ4. By the switching control, the DC power of the power supply 10 is converted into the AC power, and the AC power is output to a primary winding of the transformer 30. A first smoothing capacitor C1 is provided between the full bridge circuit 20 and the power supply 10.

The transformer 30 performs voltage conversion. The transformer 30 includes the primary winding and a secondary winding. The primary winding and the secondary winding are magnetically coupled to each other in a state of being insulated from each other. The primary winding is connected to the full bridge circuit 20. One end of the primary winding is connected to the first connection point CP1 with a smoothing inductance interposed therebetween, and the other end thereof is connected to the second connection point CP2. The secondary winding is connected to the rectifier circuit 40. For example, one end of the secondary winding is connected to a third connection point CP3, and the other end thereof is connected to a fourth connection point CP4.

A degree of the voltage conversion of the transformer 30 is determined according to a turn ratio (voltage conversion ratio) of the primary winding to the secondary winding. In the present embodiment, the transformer 30 steps down the AC power supplied from the full bridge circuit 20 and outputs the stepped-down AC power to the rectifier circuit 40.

The rectifier circuit 40 rectifies the AC power into DC power. The rectifier circuit 40 includes four diodes D1 to D4. The rectifier circuit 40 constitutes a bridge circuit with the first to fourth diodes D1 to D4 and performs full-wave rectification.

The first diode D1 has an anode connected to the third connection point CP3 and a cathode connected to the smoothing inductance 50. The second diode D2 has an anode connected to a ground and a cathode connected to the third connection point CP3. The third diode D3 has an anode connected to the fourth connection point CP4 and a cathode connected to the smoothing inductance 50. The fourth diode D4 has an anode connected to the ground and a cathode connected to the fourth connection point CP4.

The rectifier circuit 40 rectifies the AC power stepped down by the transformer 30 into the DC power, and outputs the DC power to the output unit 80 via the smoothing inductance 50 and the switching unit 70.

The smoothing inductance 50 smooths a direct current (pulsating current). The smoothing inductance 50 is provided between the rectifier circuit 40 and the switching unit 70. One end of the smoothing inductance 50 is connected to the cathodes of the first diode D1 and the third diode D3, and the other end thereof is connected to the power supply line 60.

The smoothing inductance 50 stores energy when a current is supplied according to switching of the first to fourth input-side switching elements IQ1 to IQ4, and discharges the stored energy to supply power to the power supply line 60 when a supply of the current is stopped.

The power supply line 60 is a conductive line connected to the output unit 80, and includes a first power supply line 61 connected to a first output unit 81 and a second power supply line 62 connected to a second output unit 82. A load (first load) connected to the first power supply line 61 and a load (second load) connected to the second power supply line 62 have different operating voltages.

The switching unit 70 adjusts currents flowing through the two output units 81, 82. The switching unit 70 constitutes a single inductor multi-output (SIMO) type circuit together with the smoothing inductance 50. The switching unit 70 includes a first output-side switching element OQ1 provided on the first power supply line 61 and a second output-side switching element OQ2 provided on the second power supply line 62. Similarly to the first to fourth input-side switching elements IQ1 to IQ4, the first and second output-side switching elements OQ1, OQ2 are constituted by, for example, N-channel MOSFETs.

The output unit 80 includes the first output unit 81 and the second output unit 82. A voltage at a level different from that of the second output unit 82 is output from the first output unit 81. A second smoothing capacitor C2 is provided on a first output-side switching element OQ1 side of the first output unit 81, and a third smoothing capacitor C3 is provided on a second output-side switching element OQ2 side of the second output unit 82.

The current sensor 90 includes a first current sensor 91 provided on the first power supply line 61 and a second current sensor 92 provided on the second power supply line 62. The first current sensor 91 outputs a signal, corresponding to an output current Io₁ output from the first power supply line 61, to the control unit 100. The second current sensor 92 outputs a signal, corresponding to an output current Io₂ output from the second power supply line 62, to the control unit 100.

The control unit 100 performs PWM control, that is, on/off control on the first to fourth input-side switching elements IQ1 to IQ4 and the first and second output-side switching elements OQ1, OQ2. The control unit 100 obtains the output currents Io₁, Io₂ based on the signals from the first current sensor 91 and the second current sensor 92. The control unit 100 performs the on/off control on the switching elements IQ1 to IQ4, OQ1, OQ2 based on, for example, a voltage command value transmitted from a host device and the obtained output currents Io₁, Io₂.

Here, in such a voltage conversion device 1, when a difference between the output currents Io₁, Io₂ is large, one of duty ratios D₁, D₂ of the first and second output-side switching elements OQ1, OQ2 becomes small, so that a minimum pulse width cannot be ensured, which may cause a problem of heat generation and make it impossible to obtain a desired output. Hereinafter, this point will be described in detail.

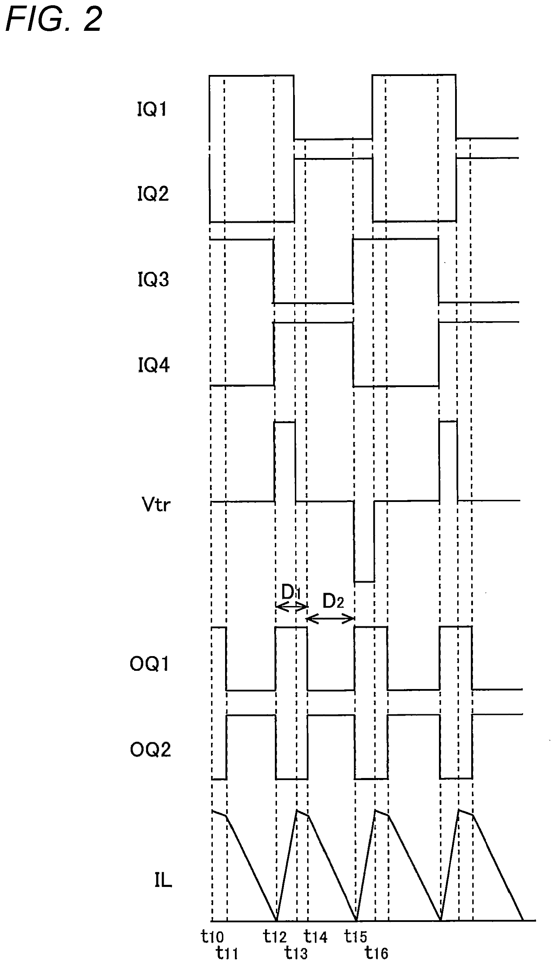

Fig. 2 is a timing chart showing a state of control of a voltage conversion device according to a first comparative example. As shown in Fig. 2, in the voltage conversion device according to the first comparative example, for example, at a time point t10, the first and third input-side switching elements IQ1, IQ3 are turned on, and the first output-side switching element OQ1 is turned on. At this time, for example, a current of the smoothing inductance 50 has a maximum value. The second and fourth input-side switching elements IQ2, IQ4 are turned off, and the second output-side switching element OQ2 is also turned off.

Next, at a time point t11, the first output-side switching element OQ1 is turned off, and the second output-side switching element OQ2 is turned on. Thereby, power is supplied to the second output unit 82 using energy stored in the smoothing inductance 50.

Next, at a time point t12 at which the energy stored in the smoothing inductance 50 is exhausted, the third input-side switching element IQ3 is turned off, and the fourth input-side switching element IQ4 is turned on. Thereby, a positive voltage Vtr is applied to the primary winding of the transformer 30, and energy is stored in the smoothing inductance 50 through the secondary winding. In addition, at the time point t12, the first output-side switching element OQ1 is turned on, and the second output-side switching element OQ2 is turned off. Therefore, power is supplied to the first output unit 81.

Thereafter, at a time point t13, the first input-side switching element IQ1 is turned off, and the second input-side switching element IQ2 is turned on. Thereby, power is supplied to the first output unit 81 using energy stored in the smoothing inductance 50.

Next, at a time point t14, the first output-side switching element OQ1 is turned off, and the second output-side switching element OQ2 is turned on. Thereby, power is supplied to the second output unit 82 using energy stored in the smoothing inductance 50.

Next, at a time point t15 at which the energy stored in the smoothing inductance 50 is exhausted, the third input-side switching element IQ3 is turned on, and the fourth input-side switching element IQ4 is turned off. Thereby, a negative voltage Vtr is applied to the primary winding of the transformer 30, and energy is stored in the smoothing inductance 50 through the secondary winding. In addition, at the time point t15, the first output-side switching element OQ1 is turned on, and the second output-side switching element OQ2 is turned off. Therefore, power is supplied to the first output unit 81.

Thereafter, in transition to a time point t16, operations from the time point t10 to the time point t15 are repeatedly executed. Here, when the output current Io₁ from the first output unit 81 decreases, the duty ratio D₁ of the first output-side switching element OQ1 becomes small, and a period during which the first output-side switching element OQ1 is on should be shortened. However, when a minimum pulse width has already been obtained in a period from the time point t12 to the time point t14, the minimum pulse width cannot be maintained. If the minimum pulse width cannot be maintained, the problem of heat generation occurs and the desired output cannot be obtained.

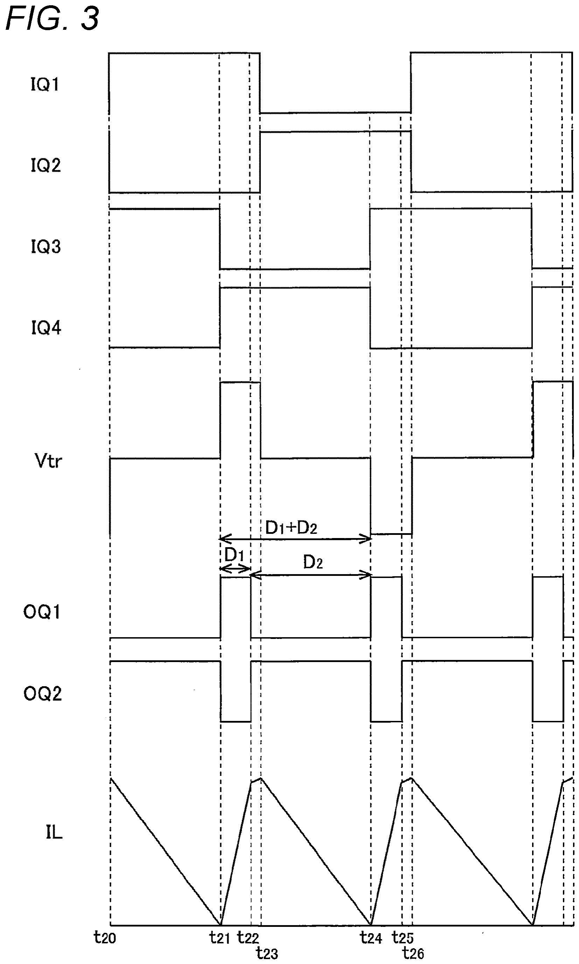

Fig. 3 is a timing chart showing a state of control of a voltage conversion device according to a second comparative example. When the minimum pulse width cannot be maintained as described above, it is assumed that a switching frequency is lowered, that is, a switching cycle is prolonged, as shown in the second comparative example. In this case, as shown in Fig. 3, although a ratio of D₁ to D₁ + D₂, that is, the duty ratio D₁ is lower than that of the first comparative example shown in Fig. 2, a pulse width in a period during which the first output-side switching element OQ1 is on is the same as that of the first comparative example, and a minimum pulse width is ensured.

However, in the second comparative example shown in Fig. 3, since the switching frequency is lowered as a whole, it is necessary to store a large amount of energy in the smoothing inductance 50 and output the energy for a long period of time, for example, from a time point t20 to a time point t21, from a time point t23 to a time point t24, and thus an inductance value of the smoothing inductance 50 is increased, resulting in an increase in a size of the smoothing inductance 50. In addition, the transformer 30 and the second and third smoothing capacitors C2, C3 also increase in size.

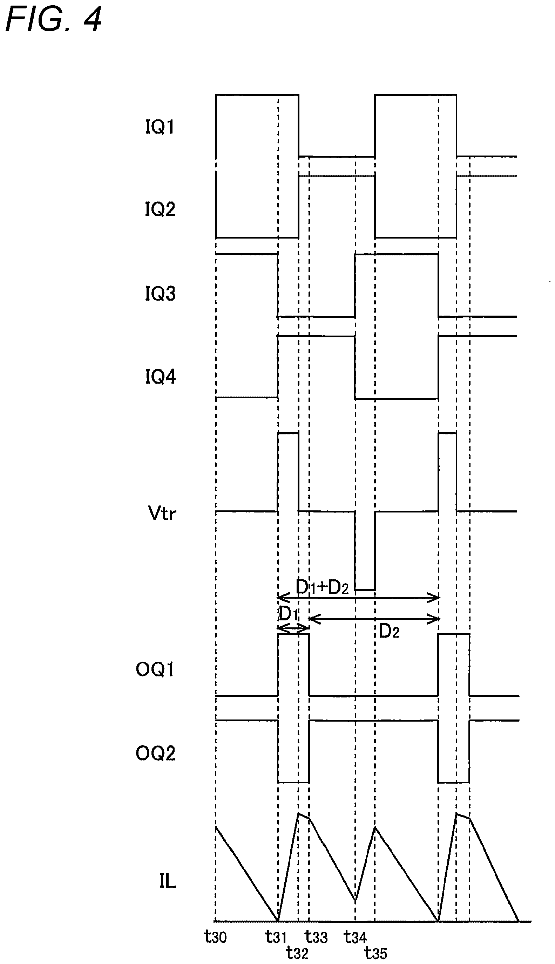

Fig. 4 is a timing chart showing a state of control of the voltage conversion device 1 according to the present embodiment. As shown in Fig. 4, in the voltage conversion device 1 according to the present embodiment, switching frequencies of the first and second output-side switching elements OQ1, OQ2 are lower than those of the first to fourth input-side switching elements IQ1 to IQ4. Here, in general, a switching frequency on an output side is usually higher than or equal to a switching frequency on the input side. However, in the present embodiment, the switching frequencies of the first and second output-side switching elements OQ1, OQ2 are lower than those of the first to fourth input-side switching elements IQ1 to IQ4. As a result, an increase in the size of the smoothing inductance 50 is prevented while maintaining the minimum pulse width. This will be described in detail below.

First, at a time point t30, the first and third input-side switching elements IQ1, IQ3 are turned on, and the second output-side switching element OQ2 is turned on. At the time point t30, energy is stored in the smoothing inductance 50, and power is supplied to the second output unit 82 using the energy in the smoothing inductance 50. The second and fourth input-side switching elements IQ2, IQ4 are turned off, and the first output-side switching element OQ1 is also turned off.

Next, at a time point t31 at which the energy stored in the smoothing inductance 50 is exhausted, the third input-side switching element IQ3 is turned off, and the fourth input-side switching element IQ4 is turned on. Thereby, a positive voltage Vtr is applied to the primary winding of the transformer 30, and energy is stored in the smoothing inductance 50 through the secondary winding. In addition, at the time point t31, the first output-side switching element OQ1 is turned on, and the second output-side switching element OQ2 is turned off. Therefore, power is supplied to the first output unit 81.

Thereafter, at a time point t32, the first input-side switching element IQ1 is turned off, and the second output-side switching element OQ2 is turned on. Thereby, power is supplied to the first output unit 81 using energy stored in the smoothing inductance 50.

Next, at a time point t33, the first output-side switching element OQ1 is turned off, and the second output-side switching element OQ2 is turned on. Thereby, power is supplied to the second output unit 82 using energy stored in the smoothing inductance 50.

Thereafter, at a time point t34 before the energy stored in the smoothing inductance 50 is exhausted, the third input-side switching element IQ3 is turned on, and the fourth input-side switching element IQ4 is turned off. Thereby, a negative voltage Vtr is applied to the primary winding of the transformer 30, and energy is stored in the smoothing inductance 50 through the secondary winding. Since the second output-side switching element OQ2 continues to be in an on state also at the time point t34, power is supplied to the second output unit 82.

Thereafter, operations from the time point t30 to the time point t34 are repeatedly executed after the time point t35. Here, in the voltage conversion device 1 according to the present embodiment, as shown in Fig. 4, although a ratio of D₁ to D₁ + D₂, that is, the duty ratio D₁ is lower than that of the first comparative example shown in Fig. 2, a pulse width in a period during which the first output-side switching element OQ1 is on is the same as that of the first comparative example shown in Fig. 2, and a minimum pulse width is ensured.

In addition, since switching frequencies of the first to fourth input-side switching elements IQ1 to IQ4 are high, energy can be stored in the smoothing inductance 50 as in a period from the time point t34 to the time point t35, without reducing the switching frequency as a whole. Therefore, unlike the second comparative example, it is not necessary to store a large amount of energy in the smoothing inductance 50 and output the energy for a long period of time, and an increase in the size of the smoothing inductance 50 is also prevented.

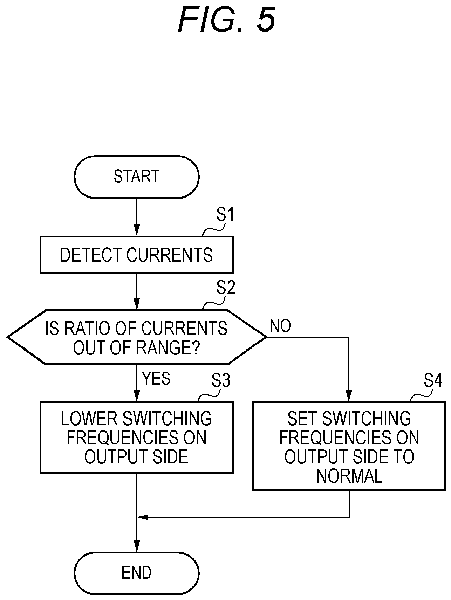

Fig. 5 is a flowchart showing processing of the control unit 100 according to the present embodiment. The voltage conversion device 1 according to the present embodiment is adapted to lower the switching frequency on the output side as shown in Fig. 4 only at a specific timing.

As shown in Fig. 5, in the voltage conversion device 1 according to the present embodiment, the control unit 100 detects the output currents Iο₁, Io₂ based on signals from the first current sensor 91 and the second current sensor 92 (S1). Next, the control unit 100 determines whether a ratio of the output currents Io₁, Io₂ detected in step S1 is out of a predetermined range (S2).

When the ratio is out of the predetermined range (S2: YES), the control unit 100 lowers switching frequencies of the first and second output-side switching elements OQ1, OQ2 (S3). Thereby, as described with reference to Fig. 4, it is possible to easily lower a duty ratio while ensuring a minimum pulse width. Thereafter, the processing shown in Fig. 5 ends.

On the other hand, when the ratio is within the predetermined range (S2: NO), the control unit 100 sets the switching frequencies of the first and second output-side switching elements OQ1, OQ2 to normal (S4). In this way, when the minimum pulse width can be ensured without lowered the switching frequency, control is performed at a normal switching frequency. Thereafter, the processing shown in Fig. 5 ends.

In this way, according to the voltage conversion device 1 of the present embodiment, the switching frequencies of the first and second output-side switching elements OQ1, OQ2 are set to be lower than switching frequencies of the first to fourth input-side switching elements IQ1 to IQ4 to perform on/off control. Therefore, for example, even if the duty ratio becomes extremely small, a switching cycle on the output side is ensured to be long. Therefore, even with such a duty ratio, the minimum pulse width can be easily maintained. In addition, since the switching frequency on the output side is lowered, it is possible to prevent the energy from being hardly supplied to the smoothing inductance 50 as in a case where the switching frequency on the input side is lowered. It is possible to prevent an increase in the size of the smoothing inductance 50 as compared with a case where the switching frequency is lowered as a whole. Therefore, it is possible to provide the voltage conversion device 1 capable of ensuring the minimum pulse width, suppressing heat generation, easily obtaining a desired output, and preventing an increase in the size of the smoothing inductance 50.

When the current ratio of the output currents Io₁, Io₂ supplied to the first and second loads via the first and second power supply lines 61, 62 is out of the predetermined range, the switching frequencies for performing on/off control on the first and second output-side switching elements OQ1, OQ2 are lowered. Therefore, for example, when there is a possibility that one duty ratio at which the current ratio is out of the predetermined range becomes extremely small and the minimum pulse width cannot be maintained, the switching frequency on the output side is lowered. Thereby, even when the switching cycle is prolonged and the duty ratio is small, the minimum pulse width can be easily maintained. Therefore, when it is difficult to ensure the minimum pulse width, the switching frequency on the output side can be lowered, and the minimum pulse width can be ensured and the desired output can be easily obtained.

Although the present invention has been described above based on the embodiment, the present invention is not limited to the above embodiment, and modifications may be made or well-known techniques may be combined without departing from the scope of the present invention.

For example, in the present embodiment, the insulating type voltage conversion device 1 has been described as an example, but the present invention is not particularly limited thereto, and a non-insulating type voltage conversion device may be used. In addition, the voltage conversion device 1 is not limited to a voltage step-down device but may be a voltage step-up device. Further, the present invention is not limited to the synchronous rectification type voltage conversion device 1 including the full bridge circuit 20, and the full bridge circuit 20 may not be included, and diode rectification may be possible.

In addition, in the voltage conversion device 1 according to the present embodiment, as shown in Fig. 5, the switching frequencies of the first and second output-side switching elements OQ1, OQ2 are lowered or made normal based on the output currents Io₁ and Io₂ , but the present invention is not limited thereto, and the switching frequencies of the first and second output-side switching elements OQ1, OQ2 may be fixed in a state of being lowered, or may be varied in a state where the switching frequencies are lower than those of the first to fourth input-side switching elements IQ1 to IQ4.

According to the present invention, it is possible to provide a voltage conversion device capable of ensuring a minimum pulse width, suppressing heat generation, easily obtaining a desired output, and preventing an increase in a size of a smoothing inductance.

## Claims

1. A voltage conversion device (1) configured to convert an input voltage supplied from a power supply (10) into a desired output voltage, the voltage conversion device comprising:
a smoothing inductance (50) configured to store energy therein;
an input-side switching unit (IQ1-IQ4) provided on an input side of the smoothing inductance (50) and configured to perform switching and supply a current to the smoothing inductance (50) according to the switching;
a first power supply line (61) provided on an output side of the smoothing inductance (50) and configured to supply power to a first load;
a second power supply line (62) provided on the output side of the smoothing inductance (50) and configured to supply power to a second load operating at an operating voltage different from that of the first load;
a first output-side switching unit (OQ1) provided on the first power supply line (61);
a second output-side switching unit (OQ2) provided on the second power supply line (62); and
a control unit (100) configured to perform on/off control on the input-side switching (IQ1-IQ4) unit and first and second output-side switching units (OQ1, OQ2),
wherein the control unit (100) performs the on/off control by setting switching frequencies of the first and second output-side switching units (OQ1, OQ2) to be lower than a switching frequency of the input-side switching unit (IQ1-IQ4).

2. The voltage conversion device (1) according to claim 1, further comprising:
a first current sensor (91) configured to detect a current output from the first power supply line; and
a second current sensor (92) configured to detect a current output from the second power supply line,
wherein, when a ratio of currents flowing through the first and second power supply lines (61, 62) obtained through current detection by the first current sensor and the second current sensor (91, 92) is out of a predetermined range, the control unit (100) sets switching frequencies for performing the on/off control on the first and second output-side switching units (OQ1, OQ2) to be lower than a switching frequency of the input-side switching unit (IQ1-IQ4).
